# EUROPEAN PATENT SPECIFICATION

(11) **EP 1 031 498 B1**
(45) Date of publication and mention of the grant of the patent: **11.06.2003**
(21) Application number: 99125947.4
(22) Date of filing: 27.12.1999
(51) Int. Cl.: B62D 43/00

(54) **A support assembly for a spare wheel of a vehicle**
Tragkonstruktion für das Reserverad eines Fahrzeugs
Structure support de la roue de secours d'un véhicule

(30) Priority: 23.02.1999 IT TO990139
(43) Date of publication of application: 30.08.2000
(73) Proprietor: IVECO FIAT S.p.A., 10156 Torino (IT)
(72) Inventor: Vischi, Alessandro, 25124 Brescia (IT)
(74) Representative: Franzolin, Luigi

(56) References cited:
- US-A- 4 278 191
- US-A- 5 002 452

## Description

The present invention relates to a support assembly for a spare wheel of a vehicle, in particular of an industrial vehicle. A support assembly according to the preamble of claim 1 is generally known.

Support assemblies for a spare wheel are known which substantially comprise an attachment bracket fixed to a frame of the vehicle. and a support, generally a rectangular plate, designed to be mounted on the wheel and to be releasably connected to the bracket itself by means of a plurality of bolts in a first operative position, in which the bracket and the support keep the wheel raised from the ground.

The aforementioned support assemblies further comprise an actuating device, generally formed by a winch, which can be actuated selectively and following the release of the bolts so as to displace the support, and therefore the spare wheel, with respect to the bracket between the first operative position and a second operative position, in which the spare wheel rests on the ground.

The above-described support assemblies have the disadvantage of being relatively complicated and expensive, particularly because the winch generally requires the provision of a gear-type transmission which is disposed-upstream of the winch itself and which is adapted to reduce accordingly the effort of raising the spare wheel (which in the case of commercial vehicles may weigh more than 100 kg).

The object of the present invention is to devise a support assembly for a spare wheel of a vehicle, which makes it possible to obviate the disadvantages associated with the above-mentioned known assemblies.

This object is achieved by the present invention in that it relates to a support assembly for a spare wheel of a vehicle, in particular a commercial vehicle, of the type comprising a support designed to be mounted on the wheel, releasable connecting means for connecting said support to attachment means on a frame of said vehicle in a first operative position, in which said attachment means and said support keep said wheel raised from the ground, and actuator means which can be actuated selectively and following the release of said connecting means so as to displace the support with respect to said attachment means between said first operative position and a second operative position, in which said spare wheel rests on the ground, characterised in that said actuator means comprise a screw-nut device interposed between said support and said attachment means.

With a view to a better understanding of the present invention a preferred embodiment will be described non-restrictively by way of example below, with reference to the accompanying drawings, in which:
Figure 1 is an exploded view from above of a support assembly for a spare wheel of a vehicle, in accordance with the present invention;
Figure 2 is an exploded front view of the support assembly in Figure 1;
Figure 3 is a side view partly in section of the support assembly in Figure 1, in a rest configuration in which it keeps the spare wheel raised from the ground;
Figure 4 illustrates on an enlarged scale and in a partly sectional side view a detail of the support assembly of Figure 3;
Figure 5 is a section along the line V-V in Figure 4;
Figure 6 is a side view on a reduced scale of the support assembly in Figure 1, in the removal stage of the spare wheel; and
Figure 7 is a view from above of the support assembly in Figure 6.

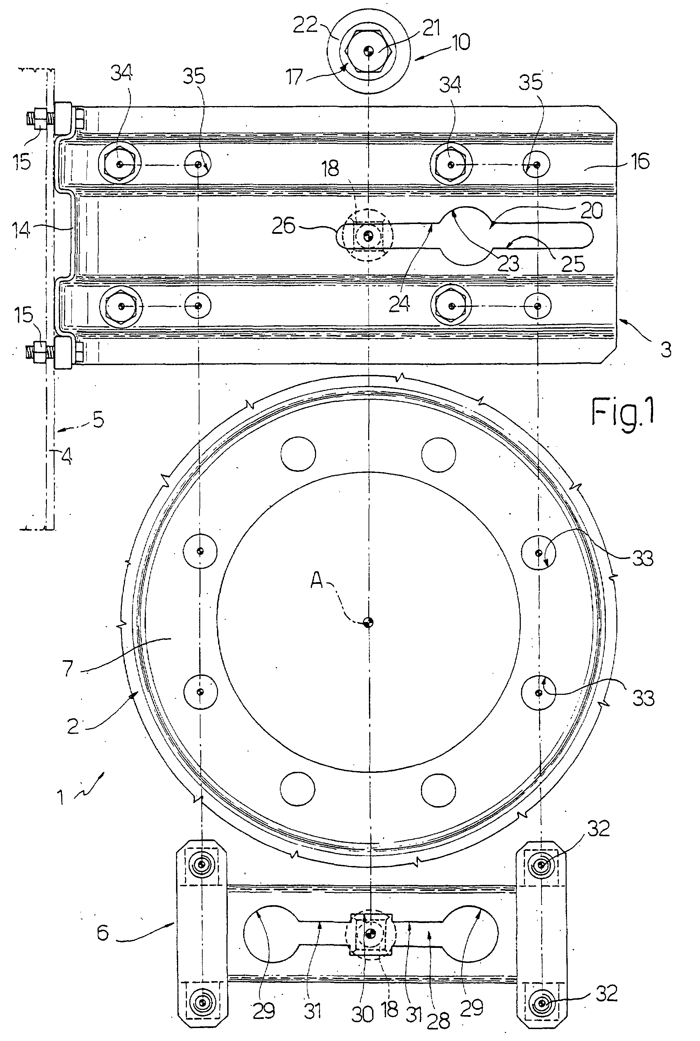

Referring now to Figures 1, 2, 3, 6 and 7, the reference numeral 1 generally denotes a support assembly for a spare wheel 2 of a commercial vehicle (not shown), said spare wheel having an axis A.

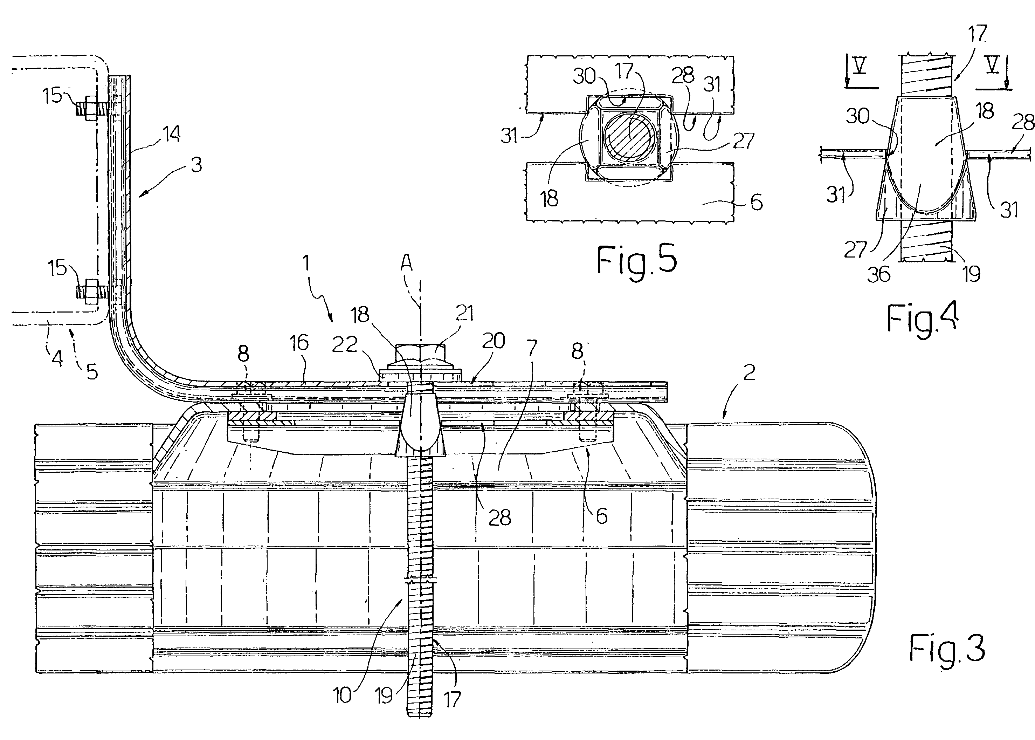

The assembly 1 essentially comprises an attachment bracket 3 which is substantially L-shaped in side view and which is securely connected to a side member 4 of a frame 5 of the vehicle, a substantially rectangular support plate 6 adapted to be mounted from the inside on a rim 7 of the horizontally arranged wheel 2, i.e. with its axis A orthogonal to the ground, a plurality of bolts 8, in this case four, for releasably connecting the plate 6 to the bracket 3 in a first operative position or raised position (Figure 3), in which the bracket 3 and the plate 6 maintain the wheel 2 at a distance from the ground, and an actuating device 10 which can be actuated selectively and following the release of the bolts 8 so as to displace the plate 6, and therefore the wheel 2, with respect to the bracket 3 between the first operative position and a second operative position or lowered position, in which the wheel 2 itself is released from the device 10 and is resting on the ground.

In particular, the bracket 3 comprises a first plate-shaped portion 14, which secured to the side member 4 by means of a plurality of bolts 15, and a second portion 16 which is also plate-shaped and extends orthogonally projecting from the portion 14 towards the exterior of the vehicle and adapted to enable the wheel 2 to be secured with its axis A orthogonal to the portion 16 itself.

The plate 6 is adapted to be secured below and parallel to the portion 16 of the bracket 3, with the interposition of a lateral portion of the rim 7 of the wheel 2 on which the plate 6 itself is mounted.

According to the present invention the actuating device 10 is a screw and nut which can be separated from the bracket 3 and from the plate 6 and comprising a screw 17 and a nut 18 mounted on a shank 19 of the screw. 17 itself.

In particular, the screw 17 can be installed from above in an axially withdrawable manner on the portion 16 of the bracket 3 through a slot 20 passing through the portion 16 itself and is provided, on the shank 19 and in the vicinity of a head 21 thereof, with a circular washer 22 adapted to abut from above, i.e. on the opposite side with respect to the plate 6, against a lateral edge of the slot 20.

Referring particularly to Figure 1, the slot 20 has an intermediate circular portion 23 of enlarged section so as to allow the nut 18 to pass with clearance through the portion 16 of the bracket 3 and opposing straight lateral portions 24,25 of constant transverse dimensions smaller than the diameter of the intermediate portion 23 and directed towards the portion 14 of the bracket 3 and, respectively, towards a free end of the portion 16 of the bracket 3 itself; more precisely, the intermediate portion 23 is of smaller diameter than the diameter of the washer 22.

With reference to the first operative position of the plate 6, i.e. to the securing position of the wheel 2 between the plate 6 itself and the bracket 3, the slot 20 has one end 26 disposed in the vicinity of the axis A of the wheel 2 and it extends from the end 26 itself towards the free end of the portion 16.

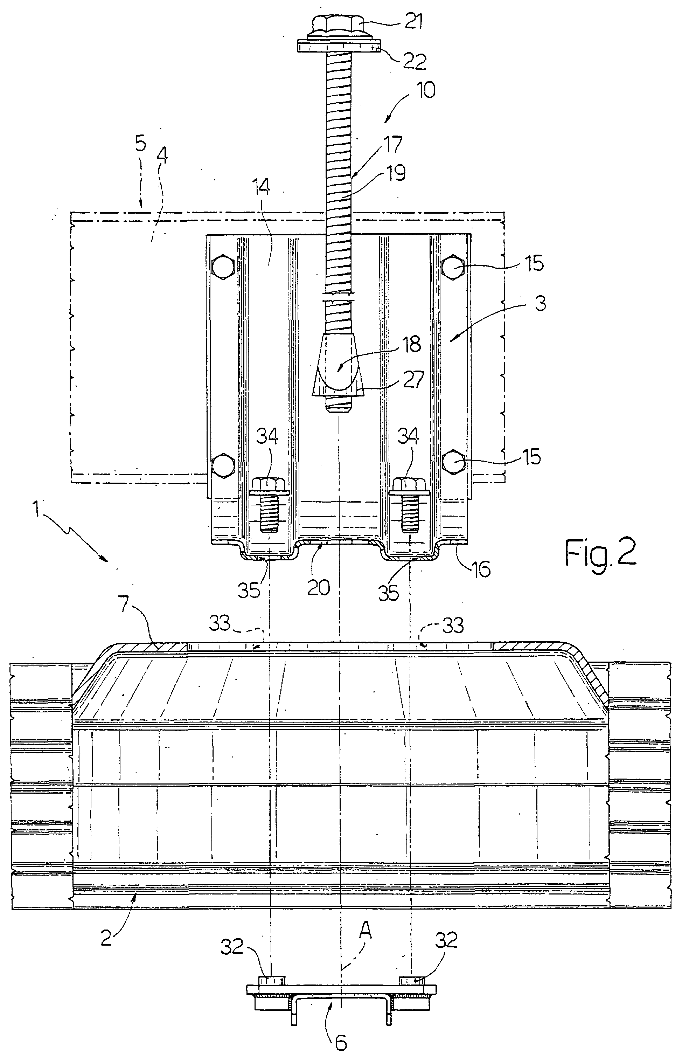

With reference to Figures 2 to 4, the nut 18 is substantially in the shape of a square-based pyramidal frustum, is of increasing section starting from an upper end facing towards the head 21 of the screw 17 and, on the opposite side, it ends in a lower circular portion 27.

Referring now to the accompanying drawings, the plate 6 is also provided with a through-slot 28 adapted to be engaged by the nut 18.

The slot 28 (Figure 1) has a pair of circular end portions 29 of enlarged section to enable the nut 18 to pass with clearance, and a central portion 30 of square section adapted to be coupled with an intermediate portion 36 of the nut 18 (Figure 4) so as to render the nut 18 itself angularly secured to the plate 6. More precisely, the circular portion 27 of the nut 18 is of larger diameter with respect to the side of the section of the central portion 30, the lateral edge of which thus defines at the bottom, i.e. on the opposite side with respect to the bracket 3, an abutment for the circular portion 27 itself.

The slot 28 also has a pair of straight intermediate portions 31 which are interposed between the central portion 30 and the respective end portions 29 and which are of reduced cross-sectional size with respect to the transverse dimensions of the sections of the portions 29 and 30 so as to allow sliding engagement only of the shank 19 of the screw 17.

With reference to the first operative position of the plate 6, i.e. to the securing position of the wheel 2 between the plate 6 itself and the bracket 3, the slot 28 has one end of the portions 29 in alignment with the intermediate portion 23 of the slot 20 and the central portion 30 disposed coaxial to the axis A of the wheel 2.

Therefore, the slot 28 is of symmetrical form with respect to a plane orthogonal to the plate 6 and passing through the axis A of the wheel 2. This symmetrical form makes it possible to facilitate the mounting of the plate 6 on the wheel 2, it making no difference how the plate 6 itself is oriented in a longitudinal direction with respect to the slot 28.

Finally, each bolt 8 comprises a nut 32 protruding from and integral with an associated apex portion of the plate 6 and adapted to engage in operation in an associated through-hole 33 provided in the rim 7 of the wheel 2, and a screw 34 fitted through a through-hole 35 in the portion 16 of the bracket 3 and adapted to be connected with the nut 32 itself so as to define the first operative position of the plate 6.

The mode of operation of the support assembly 1 will now be described starting from the rest condition illustrated in Figure 3.

In the aforementioned condition, the plate. 6 is disposed in its first operative position and is securely connected to the bracket 3 by means of the bolts 8 and the wheel 2 is held between the plate 6 and the bracket 3 in a horizontal position raised from the ground, i.e. with its axis A orthogonal to the ground itself.

The removal of the spare wheel 2 takes place as follows.

Firstly, the device 10 is inserted from above through the intermediate and end portions 23 and 29 of the respective slots 20,28, each of which is positioned in registration with the other, until the nut 18 is disposed below the plate 6.

At this point, the screw 17 is displaced through the lateral and intermediate portions 24 and 31 of the respective slots 20,28 so as to bring the shank 19 into abutment against the end 26 of the slot 20 and into engagement in the central portion 30 of the slot 28.

Therefore, by arranging the washer 22 to abut from above against the edge of the slot 20 and by acting on the screw 17, the nut 18 is caused to undergo translation along the shank 19 of the screw 17 until the nut 18 itself engages the central portion 30 of the slot 28.

After the bolts 8 have been released, it is merely necessary to act on the screw 17 so as to cause the nut 18 and the wheel 2 to undergo translation along the shank 19 until the wheel 2 itself comes to rest on the ground and, therefore, in a position available for the wheel change. Alternatively, by utilising the high inertia of the wheel 2 it is possible to achieve the same result by acting initially on the screw 17 so as to bring about an initial displacement of the nut 18 with respect to the screw 17 itself and subsequently by simply applying pressure to the wheel 2 in a tangential direction.

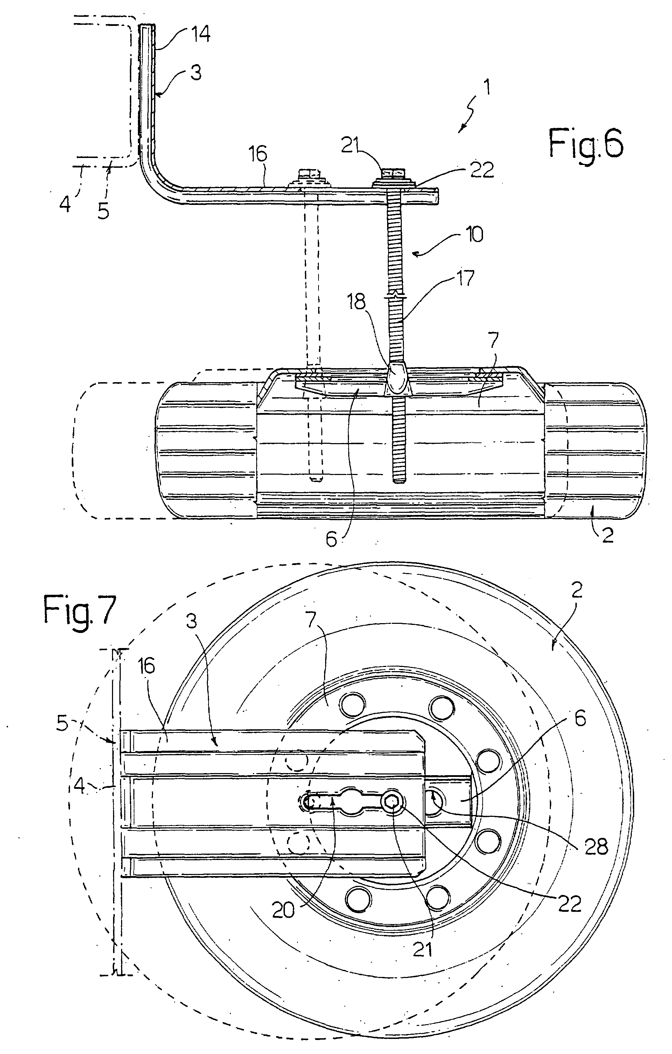

When the nut 18 -is arranged in engagement in the portion 30 of the slot 28 and the bolts 8 are released, i.e. when the wheel 2 is supported exclusively by the device 10 and by the plate 6 and is still raised with respect to the ground, it is possible to move the wheel 2 itself to the outside with respect to the lateral profile of the vehicle by displacing the screw 17 along the portion 25 of the slot 20 (Figures 6 and 7). In this way, at the end of the removal manoeuvre, the wheel 2 is arranged in a position which is readily accessible for the user.

The fastening of the spare wheel 2 to the bracket 3 takes place as follows.

Firstly, the wheel 2, which is resting on the ground in horizontal position, is disposed below the portion 16 of the bracket 3 in such way that as far as possible it is in alignment with the slot 20 and the plate 6 is inserted inside the rim 7.

At this point, the device 10, which has the nut 28 suitably positioned level with one end of the shank 19 of the screw 17 opposite the head 21, is inserted through the intermediate and end portions 23 and 29 of the respective slots 20,28 until the nut 18 is disposed below the plate 6.

After the nut 18 has been brought into engagement in the central portion 30 of the slot 28 and the washer 22 abuts from above against the edge of the slot 20, by turning the screw 17 the nut 18 and the plate 6 secured thereto are caused to undergo translation. Therefore, the shank 19 of the screw 17 is displaced through the associated lateral portion 24 of the slot 20 until the nuts 32 of the plate 6 are positioned in alignment with the holes 33 of the rim 7 itself and, therefore, it is possible to effect the raising of the wheel 2 with respect the ground.

When the rim 7 of the wheel 2 supported by the plate 6 is in the vicinity of the portion 16 of the bracket 3, the wheel 2 is pushed towards the centre of the vehicle until the screw 17 is situated in abutment against the end 26 of the slot 20, the nuts 32 then disposed in alignment with the holes 35 of the portion 16 itself of the bracket 3. In the meantime, one of the end portions 29 of the slot 28 is brought into alignment with the intermediate portion 23 of the slot 20.

The translation of the plate 6 ends when the rim 7 of the wheel 2 is arranged to abut against the portion 16 of the bracket 3 (first operative position of the plate 6).

At this point, the screws 34 are fitted into the respective nuts 32 of the plate 6 and it is possible to proceed with the removal of the device 10. In particular, since the nut 18 is locked in abutment against the central portion 30 of the slot 28 of the plate 6, and by continuing to act on the screw 17 in the same direction, the translation upwards of the screw 17 itself with respect to the nut 18 is obtained. When the washer 22 is moved upwards to a sufficient extent from the portion 16 of the bracket 3, the screw 17 can be pushed downwards so to induce the disengagement of the nut 18 from the central portion 30 of the slot 28 and moved along the lateral and intermediate portions 24 and 31 of the respective slots 20,28 until reaching the intermediate and end portions 23 and 29, through which the device 10 can be removed by pulling it upwards.

Alternatively, the device 10 could also be left permanently in the operative position. If this solution is chosen, the device 10 could preferably be made of a material not subject to oxidation and, moreover, the pitch of the screw 17 itself could be chosen to be sufficiently wide so that any dirt accumulating during normal use of the vehicle could easily be eliminated during the actuation of the plate 6 when changing the spare wheel.

The advantages achieved with the present invention are apparent from a study of the features of the support assembly 1 designed in accordance with therewith.

In particular, the support assembly 1 is particular simple and economical since. it comprises a relatively low number of components, in this case the plate 6, the screw and nut device 10 and the bolts 8.

It is evident that the support assembly 1 can be subject to modifications and variants which do not depart from the scope of protection defined by the claims.

## Claims

1. A support assembly (1) for a spare wheel (2) of a vehicle, in particular a commercial vehicle, of the type comprising a support (6) designed to be mounted on said wheel (2), releasable connecting means (8) for connecting said support (6) to attachment means (3) on a frame (5) of said vehicle in a first operative position, in which said attachment means (3) and said support (6) keep said wheel (2) raised from the ground, and actuator means (10) which can be actuated selectively and following the release of said connecting means (8) so as to displace said support (6) with respect to said attachment means (3) between said first operative position and a second operative position, in which said wheel (2) rests on the ground, **characterised in that** said actuator means comprise a screw-nut device (10) interposed between said support (6) and said attachment means (3).

2. An assembly according to claim 1, **characterised in that** the screw-nut device (10) comprises a screw (17) and nut (18), and **in that** at least said screw (17) is mounted in an axially withdrawable manner through a first through-seating (20) of said attachment means (3) and is provided, in alignment with a head (21) thereof, with stop means (22) adapted to abut against a lateral edge of said first seating (20) on the opposite side with respect to said support (6).

3. An assembly according to claim 2, **characterised in that** said nut (18) is mounted on a shank (19) of said screw (17) and defines with the screw (17) itself an assembly which can be separated from said support (6) from said attachment means (3); said first seating (20) having at least one first portion (23) of enlarged section so as to allow said nut (18) to pass wits clearance; said support (6) having a second through-seating (28) adapted to be engaged by said screw (17) and comprising at least one second portion of enlarged section (29) in alignment with said first portion (23) of enlarged section so as to allow said nut (18) to pass with clearance, and at least one shaped portion (30) adapted to be coupled with an engagement portion (36) of complementary shape of said nut (18) for angularly securing the nut (18) to said support (6), and adapted to define with a lateral edge thereof and on the opposite side with respect to said attachment means (3) an abutment for a thrust portion (27) of said nut (18) with a section of larger dimensions than the dimensions of the section of said engagement portion (36).

4. An assembly according to claim 3, **characterised in that** said first seating (20) is a slot having said first portion (23) of enlarged section in an intermediate position.

5. An assembly according to claim 4, **characterised in that** said first seating (20) has two straight lateral portions (24,25) extending on opposite sides of said first portion (23) of enlarged section and having smaller transverse dimensions than the transverse dimensions of the first portion (23) of enlarged section itself.

6. An assembly according to claim 4 or 5, **characterised in that** said shaped portion (30) of said second seating (28) is of square section, and **in that** said nut (18) is substantially in the shape of a square-based pyramidal frustum, is of increasing section starting from an upper end facing towards said head (21) of said screw (17), is adapted to co-operate with said shaped portion (30) through an intermediate portion (36) thereof defining said engagement portion and ends, in alignment with an opposite end, in a circular portion (27) defining said thrust portion.

7. An assembly according to any of claims 3 to 6, **characterised in that** said first and second portions (23,29) of enlarged section of said first and second seatings (20,28) are disposed mutually in alignment in said first operative position of said support (6).

8. An assembly according to any one of claims 3 to 7, **characterised in that** said second seating (28) is a slot and has, between said second portion (29) of enlarged section and said shaped portion (30), a straight intermediate portion (31) having a section of reduced dimensions with respect to the dimensions of the sections of said second portion of enlarged section (29) and with respect to said shaped portion (30) so as to allow the sliding engagement only of said shank (19) of said screw (17).

9. An assembly according to claim 8, **characterised in that** said second seating (28) has two second portions of enlarged section (29) defining the opposite ends of said second seating (28) itself and one shaped portion (30) disposed centrally and connected with said second portions (29) of enlarged section by respective intermediate portions (31).

10. An assembly according to any one of claims 2 to 9, **characterised in that** said attachment means comprise a bracket (3) which is substantially L-shaped in side view and which has a plate-like portion (16) adapted to allow the fastening of said wheel (2) with its axis (A) orthogonal to the plate-like portion (16) itself and is provided with said first seating (20).

11. An assembly according to claim 10, **characterised in that** said support (6) is formed by a plate designed to be mounted on one side of said wheel (2) and to be secured to said plate-like portion (16) of said attachment means (3) in a position parallel to the plate-like portion (16) itself.

12. An assembly according to any one of claims 2 to 11, **characterised in that** said stop means comprise a washer (22) carried by said screw (17).

13. An assembly according to any one of the preceding claims, **characterised in that** said releasable connecting means comprise a plurality of bolts (8).

14. An assembly according to claim 13, **characterised in that** each bolt (8) comprises a nut (32) protruding from and integral with said support (6) and adapted to engage in operation in an associated through-hole (33) provided in a rim (7) of said wheel (2), and a screw (34) fitted through a through-hole (35) in said plate-like portion (16) of said attachment means (3) and adapted to be connected with the nut (32) itself so as to define said first operative position of said support (6).

## Patentansprüche

1. Trageanordnung (1) für ein Reserverad (2) eines Fahrzeugs, insbesondere eines Nutzfahrzeugs, einer Art, die einen Träger (6) umfasst, der auf dem Rad (2) montierbar ist, lösbare Verbindungsmittel (8), um den Träger (6) mit Befestigungsmitteln (3) auf einem Rahmen (5) des Fahrzeugs in einer ersten Arbeitsposition zu verbinden, in der die Befestigungsmittel (3) und der Träger (6) das Rad (2) vom Boden erhaben halten, und Betätigungsmittel (10), die selektiv betätigt werden können und denen das Lösen der Verbindungsmittel (8) folgt, so dass der Träger (6) in bezug auf die Befestigungsmittel (3) zwischen der ersten Arbeitsposition und einer zweiten Arbeitsposition verschoben wird, in der das Rad (2) auf dem Boden ruht, **dadurch gekennzeichnet, dass** die Betätigungsmittel eine Schraube-Mutter-Einrichtung (10) umfassen, die zwischen dem Träger (6) und dem Befestigungsmittel (3) angebracht ist.

2. Anordnung nach Anspruch 1, **dadurch gekennzeichnet, dass** die Schrauben-Mutter-Einrichtung (10) eine Schraube (17) und eine Mutter (18) umfasst, und dadurch, dass mindestens die Schraube (17) in einer axial zurückziehbaren Weise durch einen ersten durchgehenden Sitz (20) der Befestigungsmittel (3) montiert ist und ausgerichtet mit einem Kopf (21) davon mit einer Anschlageinrichtung (22) versehen ist, die gegen einen Seitenrand des ersten Sitzes (20) auf der gegenüberliegenden Seite in bezug auf den Träger (6) stoßen kann.

3. Anordnung nach Anspruch 2, **dadurch gekennzeichnet, dass** die Mutter (18) auf einem Schaft (19) der Schraube (17) montiert ist und mit der Schraube (17) eine Anordnung definiert, die von dem Träger (6) von den Befestigungsmitteln (3) gelöst werden kann; wobei der erste Sitz (20) mindestens einen ersten Bereich (23) mit vergrößertem Querschnitt aufweist, so dass die Mutter (18) durch diesen mit einem Zwischenraum gelangen kann; der Träger (6) einen zweiten durchgehenden Sitz (28) aufweist, der mit der Schraube (17) in Eingriff bringbar ist und mindestens einen zweiten Bereich mit vergrößertem Querschnitt (29) in Ausrichtung mit dem ersten Bereich (23) vergrößerten Querschnitts, so dass die Mutter (18) mit einem Zwischenraum durchgelangen kann, und mindestens einen gestalteten Bereich (30) aufweist, der mit einem Eingriffsbereich (36) komplementärer Gestalt der Mutter (18) verbindbar ist, um die Mutter (18) an dem Träger (6) rotatorisch festzulegen, und geeignet ist, mit einem Seitenrand davon und auf der gegenüberliegenden Seite in bezug auf die Befestigungsmittel (3) einen Anschlag für einen Schubbereich (27) der Mutter (18) mit einem Querschnitt mit größeren Abmessungen als den Abmessungen des Querschnitts des Eingriffsbereichs (36) zu definieren.

4. Anordnung nach Anspruch 3, **dadurch gekennzeichnet, dass** der erste Sitz (20) ein Schlitz ist, der den ersten Bereich (23) vergrößerten Querschnitts in einer mittleren Position aufweist.

5. Anordnung nach Anspruch 4, **dadurch gekennzeichnet, dass** der erste Sitz (20) zwei gerade seitliche Bereiche (24, 25) aufweist, die sich auf gegenüberliegenden Seiten des ersten Bereichs (23) vergrößerten Querschnitts erstrecken und kleinere Querabmessungen als die Querabmessungen des ersten Bereichs (23) vergrößerten Querschnitts aufweisen.

6. Anordnung nach Anspruch 4 oder 5, **dadurch gekennzeichnet, dass** der gestaltete Bereich (30) des zweiten Sitzes (28) einen quadratischen Querschnitt aufweist, und dass die Mutter (18) im wesentlichen in der Gestalt eines pyramidischen Kegelstumpfs mit quadratischem Querschnitt ist, einen zunehmenden Querschnitt aufweist, der von einem oberen Ende beginnt in Richtung auf den Kopf (21) der Schraube (17) gerichtet ist, mit dem gestalteten Bereich (30) durch einen Zwischenbereich (36), der den Eingriffsbereich definiert, zusammenwirken kann und in Ausrichtung mit einem gegenüberliegenden Ende in einem kreisförmigen Bereich (27) endet, der den Schubbereich definiert.

7. Anordnung nach einem der Ansprüche 3 bis 6, **dadurch gekennzeichnet, dass** der erste und zweite Bereich (23, 29) mit vergrößertem Querschnitt des ersten und zweiten Sitzes (20, 28) wechselweise in Ausrichtung in der ersten Arbeitsposition des Trägers (6) angeordnet sind.

8. Anordnung nach einem der Ansprüche 3 bis 7, **dadurch gekennzeichnet, dass** der zweite Sitz (28) ein Schlitz ist und zwischen dem zweiten Bereich (29) vergrößerten Querschnitts und dem gestalteten Bereich (30) einen geraden Zwischenbereich (31) aufweist, der einen Abschnitt mit verringerten Abmessungen in bezug auf die Abmessungen der Querschnitte des zweiten Bereichs vergrößerten Querschnitts (29) und in bezug auf den gestalteten Bereich (30) aufweist, so dass ein Verschiebeeingriff von nur dem Schaft (19) der Schraube (17) ermöglicht wird.

9. Anordnung nach Anspruch 8, **dadurch gekennzeichnet, dass** der zweite Sitz (28) zwei zweite Bereiche mit vergrößertem Querschnitt (29) aufweist, die die gegenüberliegenden Enden des zweiten Sitzes (28) definieren, und einen gestalteten Bereich (30), der zentral angeordnet ist und mit dem zweiten Bereich (29) vergrößerten Querschnitts durch jeweilige Zwischenbereiche (31) verbunden ist.

10. Anordnung nach einem der Ansprüche 2 bis 9, **dadurch gekennzeichnet, dass** die Befestigungsmittel eine Klammer (3) umfassen, die im wesentlichen L-förmig in der Seitenansicht ist und die einen plattenartigen Bereich (16) aufweist, der das Befestigen des Rads (2) mit seiner Achse (A) senkrecht zu dem plattenartigen Bereich (16) ermöglicht und mit dem ersten Sitz (20) versehen ist.

11. Anordnung nach Anspruch 10, **dadurch gekennzeichnet, dass** der Träger (6) durch eine Platte gestaltet ist, die auf einer Seite des Rads (2) montierbar ist und an dem plattenartigen Bereich (16) der Befestigungsmittel (3) in einer Position parallel zu dem plattenartigen Bereich (16) befestigbar ist.

12. Anordnung nach einem der Ansprüche 2 bis 11, **dadurch gekennzeichnet, dass** die Anschlagmittel eine Unterlegscheibe (22), die durch die Schraube (17) getragen wird, umfassen.

13. Anordnung nach einem der vorhergehenden Ansprüche, **dadurch gekennzeichnet, dass** die lösbaren Verbindungsmittel mehrere Bolzen (8) umfassen.

14. Anordnung nach Anspruch 13, **dadurch gekennzeichnet, dass** jeder Bolzen (8) eine Mutter (32) umfasst, die von dem Träger (6) vorsteht und integral damit ist, und die im Betrieb in ein zugehöriges Durchgangsloch (33) eingreifen kann, das in einer Felge (7) des Rads (2) vorgesehen ist, und eine Schraube (34), die durch ein Durchgangsloch (35) in den plattenartigen Bereich (16) der Befestigungsmittel (3) eingepasst ist und mit der Mutter (32) so verbindbar ist, dass die erste Arbeitsposition des Trägers (6) definiert wird.

## Revendications

1. Ensemble de support (1) pour une roue de secours (2) d'un véhicule, en particulier un véhicule commercial, du type comprenant un support (6) conçu pour être monté sur ladite roue (2), des moyens de raccordements amovibles (8) pour raccorder ledit support (6) à des moyens de fixation (3) sur un châssis (5) dudit véhicule dans une première position de fonctionnement, dans lequel lesdits moyens de fixation (3) et ledit support (6) maintiennent ladite roue (2) soulevée du sol, et des moyens d'actionneur (10) qui peuvent être actionnés de manière sélective et suite au dégagement desdits moyens de raccordement (8) afin de déplacer ledit support (6) par rapport auxdits moyens de fixation (3) entre ladite première position de fonctionnement et une seconde position de fonctionnement, dans laquelle ladite roue (2) repose sur le sol, **caractérisé en ce que** lesdits moyens d'actionneur comprennent un dispositif par vis et écrou (10) interposé entre ledit support (6) et lesdits moyens de fixation (3).

2. Ensemble selon la revendication 1, **caractérisé en ce que** le dispositif par vis et écrou (10) comprend une vis (17) et un écrou (18), et **en ce qu'**au moins ladite vis (17) est montée d'une manière extractible de manière axiale à travers un premier siège débouchant (20) desdits moyens de fixation (3) et est prévue en alignement avec une tête (21) de celle-ci, avec des moyens d'arrêt (22) adaptés pour venir en butée contre un bord latéral dudit premier siège (20) du côté opposé par rapport audit support (6).

3. Ensemble selon la revendication 2, **caractérisé en ce que** ledit écrou (18) est monté sur une tige (19) de ladite vis (17) et définit avec la vis (17) elle-même, un ensemble qui peut être séparé dudit support (6) à partir desdits moyens de fixation (3) ; ledit premier siège (20) étant au moins doté d'une première partie (23) de section agrandie afin de permettre audit écrou (18) de passer avec du jeu ; ledit support (6) étant doté d'un second siège débouchant (28) adapté pour être mis en prise avec ladite vis (17) et comprenant au moins une seconde partie de section agrandie (29) en alignement avec ladite première partie (23) de section agrandie afin de permettre audit écrou (18) de passer avec du jeu, et au moins une partie profilée (30) adaptée pour être couplée avec une partie de mise en prise (36) de forme complémentaire dudit écrou (18) pour fixer angulairement l'écrou (18) audit support (6), et adaptée pour définir avec un bord latéral de celle-ci et du côté opposé par rapport aux moyens de fixation (3), une butée pour une partie de poussée (27) dudit écrou (18) avec une section de plus grandes dimensions que les dimensions de la section de ladite partie de mise en prise (36).

4. Ensemble selon la revendication 3, **caractérisé en ce que** ledit premier siège (20) est une encoche dotée de ladite première partie (23) de section agrandie dans une position intermédiaire.

5. Ensemble selon la revendication 4, **caractérisé en ce que** ledit prèmier siège (20) est doté de deux parties latérales droites (24, 25) qui s'étendent sur des côtés opposés de ladite première partie (23) de section agrandie et ayant des dimensions transversales inférieures aux dimensions transversales de la première partie (23) de section agrandie elle-même.

6. Ensemble selon la revendication 4 ou 5, **caractérisé en ce que** ladite partie profilée (30) dudit second siège (28) est de section carrée, et **en ce que** ledit écrou (18) qui a sensiblement la forme d'une pyramide tronquée à base carrée, a une section croissante à partir d'une extrémité supérieure orientée vers ladite tête (21) de ladite vis (17), est adaptée pour coopérer avec ladite partie profilée (30) à travers une partie intermédiaire (36) de celle-ci définissant ladite partie de mise en prise et lesdites extrémités, en alignement avec une extrémité opposée, dans une partie circulaire (27) qui définit ladite partie de poussée.

7. Ensemble selon l'une quelconque des revendications 3 à 6, **caractérisé en ce que** lesdites première et seconde parties (23, 29) de section agrandie desdits premier et second sièges (20, 28) sont disposés mutuellement en alignement dans ladite première position de fonctionnement dudit support (6).

8. Ensemble selon l'une quelconque des revendications 3 à 7, **caractérisé en ce que** ledit second siège (28) est une encoche et est doté, entre ladite seconde partie (29) de section agrandie et ladite partie profilée (30), d'une partie intermédiaire droite (31) ayant une section de dimensions réduites par rapport aux dimensions des sections de ladite seconde partie de section agrandie (29) et par rapport à ladite partie profilée (30) afin de permettre la mise en prise coulissante seulement de ladite tige (19) de ladite vis (17).

9. Ensemble selon la revendication 8, **caractérisé en ce que** ledit second siège (28) est doté de deux secondes parties de section agrandie (29) qui définissent les extrémités opposées dudit second siège (28) lui-même et d'une partie profilée (30) disposée de façon centrale et reliée avec lesdites secondes parties (29) de section agrandie par des parties intermédiaires respectives (31).

10. Ensemble selon Tune quelconque des revendications 2 à 9, **caractérisé en ce que** lesdits moyens de fixation comprennent un support (3) qui est sensiblement en forme de L en vue latérale, et qui est doté d'une partie en forme de plaque (16) adaptée pour permettre la fixation de ladite roue (2) avec son axe (A) orthogonal à ladite partie en forme de plaque (16) elle-même et est prévu avec ledit premier siège (20).

11. Ensemble selon la revendication 10, **caractérisé en ce que** ledit support (6) est formé par une plaque conçue pour être montée d'un côté de ladite roue (2) et pour être fixée à ladite partie en forme de plaque (16) desdits moyens de fixation (3) dans une position parallèle à la partie en forme de plaque (16) elle-même.

12. Ensemble selon l'une quelconque des revendications 2 à 11, **caractérisé en ce que** lesdits moyens d'arrêt comprennent une rondelle (22) supportée par ladite vis (17).

13. Ensemble selon l'une quelconque des revendications précédentes, **caractérisé en ce que** lesdits moyens de raccordement amovibles comprennent une pluralité de boulons (8).

14. Ensemble selon la revendication 13, **caractérisé en ce que** chaque boulon (8) comprend un écrou (32) qui dépasse de et est solidaire avec ledit support (6) et est adapté pour se mettre en prise en fonctionnement dans un trou débouchant associé (33) prévu dans une jante (7) de ladite roue (2), et une vis (34) montée à travers un trou débouchant (35) dans ladite partie en forme de plaque (16) desdits moyens de fixation (3) et adaptée pour être reliée avec l'écrou (32) lui-même, afin de définir ladite première position de fonctionnement dudit support (6).
